## Europäisches Patentamt

## European Patent Office

## Office européen des brevets

(19)

(11) Veröffentlichungsnummer: **0 084 577**
**B1**

(12) # EUROPÄISCHE PATENTSCHRIFT

(45) Veröffentlichungstag der Patentschrift:
23.11.88

(51) Int. Cl.⁴: **F 24 F 3/153**, F 24 F 7/08,
A 01 K 1/00

(21) Anmeldenummer: 82100413.2

(22) Anmeldetag: 21.01.82

(54) Verfahren und Vorrichtung für die Wärmeübertragung zur Luftkonditionierung von Räumen für Lebewesen grosser Zahl, besonders für die Tierhaltung.

(43) Veröffentlichungstag der Anmeldung:
03.08.83 Patentblatt 83/31

(45) Bekanntmachung des Hinweises auf die Patenterteilung:
23.11.88 Patentblatt 88/47

(84) Benannte Vertragsstaaten:
AT BE CH DE FR GB IT LI LU NL SE

(56) Entgegenhaltungen:
WO-X-80/00486
DE-A-2 710 125
DE-B-2 509 038
FR-A-1 278 069

(73) Patentinhaber: KÖZPONTI VALTO- ES HITELBANK RT INNOVACIOS ALAP, Szabadság tér 5-6, H-1054 Budapest (HU)

(72) Erfinder: Varga, Agnes, Dipl.- Ing., Radvány u.19, H-1118 Budapest (HU)

(74) Vertreter: Lehn, Werner, Dipl.- Ing., Hoffmann, Eitle & Partner Patentanwälte Arabellastrasse 4, D-8000 München 81 (DE)

## Beschreibung

Die Erfindung betrifft ein Verfahren zum Behandeln der Innenluft von Räumen für Lebewesen großer Anzahl, insbesondere für die Tierhaltung, wobei die verbrauchte Luft aus den Räumen abgezogen und Frischluft mit der Innenluft vermischt wird, und der Innenluft über einen Verdampfer einer Wärmepumpe Kondensationswärme entzogen, diese Wärme über die Wärmepumpe auf ein höheres Temperaturniveau gebracht und zum Erwärmen eingesetzt wird. Die Erfindung betrifft ferner eine Vorrichtung zur Durchführung dieses Verfahrens.

Bekannt sind Anlagen (vgl. z. B. die HU-B-174 791), bei denen der größere Anteil der in Tierzuchträumen erzeugten Brüdenmenge nicht durch Ventilatoren, sondern durch Brüdenkondensation abgeführt wird und die so gewonnene Wärme im Winter zur Raumheizung, im Sommer zur Raumkühlung benutzt wird. Mit der durch Brüdenkondensation gewinnbaren Wärme, deren Temperatur relativ niedrig ist, läßt sich nur die kalte Frischluft von außen vorerwärmen, jedoch nicht der Wärmeübertragungsverlust im Raum ergänzen. Die Kühlanlage kann im Sommer nur einen geringen Anteil der durch Brüdenkondensation gewonnenen Wärme ausnutzen, und daher ist die erzielbare wirtschaftliche Wirksamkeit nicht ausreichend.

Es sind auch ein Verfahren und eine Vorrichtung der einleitend genannten Art bekannt (WO-A-80/00486), bei denen die Luft in einem geschlossenen Kreislauf geführt wird, in den im Bedarfsfalle Frischluft eingeleitet werden kann. Die aus dem Tierhalteraum austretende Luft wird hintereinander durch einen Wäscher, eine Kühleinrichtung, die den Verdampfer einer Wärmepumpe darstellt, und durch eine UV-Bestrahlungseinrichtung geführt, wonach sie über ein Gebläse in den Tierhalteraum zurückgeführt wird. Falls Frischluft zugeführt wird, erfolgt dies vor dem Wäscher. Der Kompressor der Wärmepumpe wird von einer Brennkraftmaschine angetrieben, deren Abwärme zur Erwärmung der Luft verwendet wird. Die bekannte Ausführung ist vergleichsweise kompliziert und hat einen niedrigen Wirkungsgrad als Folge des relativ hohen Energieverbrauches, der sich hauptsächlich durch die durch den Waschvorgang hervorgerufene Temperaturverringerung ergibt. Außerdem ist es bei dieser bekannten Anordnung möglich, daß die in der verbrauchten Luft enthaltene Brüde bereits vor der Wascheinrichtung kondensiert, d.h. an einer Stelle des Kreislaufes, an der sie nicht genutzt werden kann und außerdem schädliche Korrosion hervorruft.

Aufgabe der vorliegenden Erfindung ist es, die geschilderten Nachteile zu vermeiden und eine neuartige Verfahrensweise sowie eine neuartige Vorrichtung zur Durchführung dieser Verfahrensweise zu schaffen, die bei geringem technischen Aufwand eine Verbesserung des Wirkungsgrades ermöglicht.

Diese Aufgabe wird bei einem Verfahren der eingangs beschriebenen Art dadurch gelöst, daß die Frischluft unmittelbar in die Räume eingespeist und dort mit der Innenluft vermischt wird und daß ausschließlich Innenluft unmittelbar über den Verdampfer der Wärmepumpe geführt und die auf ein höheres Temperaturniveau gebrachte Wärme bei Wärmebedarf für die Räume unmittelbar zum Erwärmen der Frischluft oder bei Kühlbedarf für die Räume über ein mittels der Wärme betriebenes Absorptionskühlsystem zum Abkühlen der Frischluft eingesetzt wird.

Eine technisch vergleichsweise einfach aufgebaute Vorrichtung des erfindungsgemäßen Verfahrens, welche mit einer Abluftleitung für die verbrauchte Luft, einer Zuluftleitung für die Frischluft, einer Wärmepumpe, über deren Verdampfer die Innenluft geführt wird und über deren Kondensator die der Innenluft entzogene und auf ein höheres Temperaturniveau gebrachte Wärme auf ein Medium übertragen wird, ist erfindungsgemäß dadurch gekennzeichnet, daß die Zuluftleitung für die Frischluft unmittelbar in die Räume einmündet, daß der Verdampfer als Kondensator für die Innenluft ausgebildet und in den Räumen angeordnet ist, daß eine Behandlungseinrichtung zum Erwärmen der Frischluft sowie ein mittels dieser Wärme betriebenes Absorptionskühlsystem zum Abkühlen der Frischluft vorgesehen sind, und daß das Medium bei Wärmebedarf für die Räume in einen von der Frischluft durchströmten Wärmetauscher der Behandlungseinrichtung und bei Kühlbedarf für die Räume in einen Wärmetauscher des Absorptionskühlsystems geleitet wird.

Eine vorteilhafte Weiterbildung des erfindungsgemäßen Verfahrens ist darin zu sehen, daß die auf ein höheres Temperaturniveau gebrachte Wärme zum abströmseitigen Erwärmen der über den Verdampfer der Wärmepumpe geführten Innenluft eingesetzt wird. Diese Verfahrensweise kann bei einer Vorrichtung der erfindungsgemäßen Art dadurch realisiert werden, daß in den Räumen ein Lufterwärmer vorgesehen ist, über den das Medium bei Wärmebedarf für die Räume zumindest teilweise geleitet wird.

Das erfindungsgemäße Verfahren besitzt einen gegenüber bekannten Verfahrensweisen besseren Wirkungsgrad als Folge eines niedrigeren Energieverbrauches. Zu dem erfolgt das Kondensieren der Brüde an einer Stelle, an der die Brüde direkt genutzt werden kann.

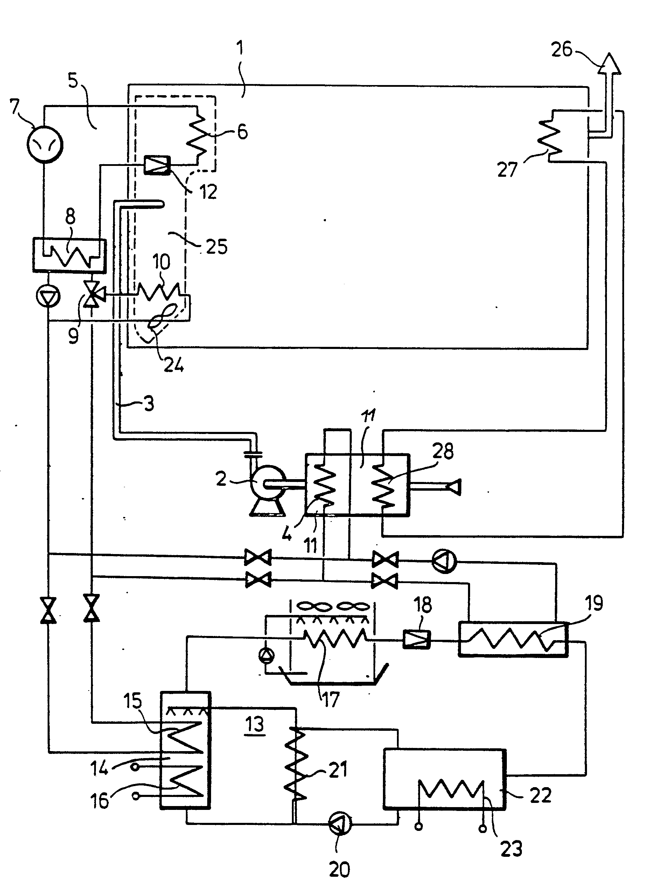

Ein Ausführungsbeispiel eines erfindungsgemäßen Verfahrens sowie einer Vorrichtung zur Durchführung des Verfahrens ist im folgenden anhand eines Schaltschemas unter Bezugnahme auf die beigefügte Zeichnung näher erläutert.

Ein Raum 1 für Lebewesen großer Zahl, vorzugsweise zur Tierhaltung, wird mittels eines Gebläses 2 über eine Zuluftleitung 3 mit Frischluft versorgt. Das Gebläse 2 ist vorzugsweise drehzahlregelbar, um die Versorgung des Raumes 1 mit Frischluft im Falle einer Änderung der Anzahl der darin gehaltenen Lebewesen anpassen zu können.

Die Frischluft wird mittels einer Behandlungseinrichtung 11 im Winter vorgewärmt und im Sommer gekühlt über die Zuluftleitung 3 in den Raum 1 eingespeist.

Hierzu ist eine Wärmepumpe 5 vorgesehen, deren wärmeaufnehmende, zur Brüdenkondensation unter dem Taupunkt dienende Oberfläche ein Verdampfer 6 ist. Die Wärmepumpe 5 besitzt einen Kompressor 7, der die Temperatur der durch die Kondensation gewonnenen Wärmemenge auf ein höheres Temperaturniveau bringt. Diese Wärmemenge höherer Temperatur wird über einen Kondensator 8 der Wärmepumpe 5 an ein wärmeaufnehmendes Medium übertragen, welches vorzugsweise Wasser ist. Das erwärmte Wasser wird über ein Ventil, vorzugsweise über ein Zweiwegeventil 9, teils über einen die Innenluft des Raumes 1 aufheizenden Lufterwärmer 10, teils über einen Wärmetauscher 4 der Behandlungseinrichtung 11 zum Vorwärmen der Frischluft geführt.

Im Sommer, wenn keine Heizung benötigt wird, sondern vielmehr die Luft eher zu kühlen ist, wird die durch den Wärmetauscher 5 auf das Medium übertragene Wärmemenge einem Kessel 14 eines Absorptionskühlsystems 13 zugeführt. Das Medium erwärmt darin über einen Wärmetauscher 15. Falls erforderlich, erfolgt eine weitere Wärmezugabe über einen zweiten Wärmetauscher 16 mittels Zufuhr von Energie. Das durch den Kessel 14 geführte Medium wird in einem Evaporationskondensator 17 kondensiert und über ein Drosselventil 18 in einen Evaporator 19 eines Wasserkühlers eingeleitet. Das evaporierte Medium wird von einem Absorber angesaugt, absorbiert die Lösung mit geringem Wärmeinhalt. Die in dieser Weise erzeugte Lösung mit hohem Wärmeinhalt wird von einer Pumpe 20 für Kühlmittellösung durch einen Wärmetauscher 21 für Lösungen mit hohem und geringem Wärmeinhalt in den Kessel 14 zurückgeführt, wo das Verfahren von neuem beginnt. Ein Wärmetauscher 23 in einem Absorber 22 zwischen dem Evaporator 19 des Wasserkühlers und der Pumpe 20 für Kühlmittellösung dient zur Entnahme der Lösungswärme.

Ist nur ein geringer Bedarf an Wärme vorhanden, z. B. während der Übergangsjahreszeit, so entnimmt die Wärmepumpe 5 nur diejenige Wärmemenge, die zur Abführung der entstandenen Brüde notwendig ist. Wird diese Wärmemenge weder zur Heizung noch zur Kühlung benutzt, so wird das Kühlwasser des Kondensators 8 dem Evaporationskondensator 17 zugeführt, der nun als Wasserrückkühler arbeitet.

Der Verdampfer 6 und der Lufterwärmer 10 sind bei einer bevorzugten Ausführungsform in einer gemeinsamen Luftumlaufeinheit 25 mit Gebläse 24 angeordnet.

Die verbrauchte Luft wird durch eine Abluftöffnung 26 aus dem Raum 1 abgeführt. Vor der Abluftöffnung 26 ist ein Wärmetauscher 27 angeordnet, der mit einem in der Behandlungseinrichtung 4 für die Frischluft angeordneten Wärmetauscher 28 verbunden ist. Die durch den Wärmetauscher 27 der verbrauchten Luft entnommene Wärmemenge verbessert in dieser Weise den Wirkungsgrad der Vorerwärmung der eingeleiteten Frischluft.

**Patentansprüche**

1. Verfahren zum Behandeln der Innenluft von Räumen für Lebewesen großer Anzahl, insbesondere für die Tierhaltung, wobei die verbrauchte Luft aus den Räumen abgezogen und Frischluft mit der Innenluft vermischt wird, und der Innenluft über einen Verdampfer einer Wärmepumpe Kondensationswärme entzogen, diese Wärme über die Wärmepumpe auf ein höheres Temperaturniveau gebracht und zum Erwärmen eingesetzt wird, dadurch gekennzeichnet, daß die Frischluft unmittelbar in die Räume eingespeist und dort mit der Innenluft vermischt wird und daß ausschließlich Innenluft unmittelbar über den Verdampfer der Wärmepumpe geführt und die auf ein höheres Temperaturniveau gebrachte Wärme bei Wärmebedarf für die Räume unmittelbar zum Erwärmen der Frischluft oder bei Kühlbedarf für die Räume über ein mittels der Wärme betriebenes Absorptionskühlsystem zum Abkühlen der Frischluft eingesetzt wird.

2. Verfahren nach Anspruch 1, dadurch gekennzeichnet, daß die auf ein höheres Tempraturniveau gebrachte Wärme zum abströmseitigen Erwärmen der über den Verdampfer der Wärmepumpe geführten Innenluft eingesetzt wird.

3. Vorrichtung zur Durchführung des Verfahrens nach Anspruch 1, mit einer Abluftleitung (26) für die verbrauchte Luft, einer Zuluftleitung (3) für die Frischluft, einer Wärmepumpe (5), über deren Verdampfer (6) die Innenluft geführt wird und über deren Kondensator (8) die der Innenluft entzogene und auf ein höhres Temperaturniveau gebrachte Wärme auf ein Medium übertragen wird, dadurch gekennzeichnet, daß die Zuluftleitung (3) für die Frischluft unmittelbar in die Räume (1) einmündet, daß der Verdampfer (6) als Kondensator für die Innenluft ausgebildet und in den Räumen (1) angeordnet ist, daß eine Behandlungseinrichtung (11) zum Erwärmen der Frischluft sowie ein mittels dieser Wärme betriebenes Absorptionskühlsystem (13) zum Abkühlen der Frischluft vorgesehen sind, und daß das Medium bei Wärmebedarf für die Räume in einen von der Frischluft durchströmten Wärmetauscher (4) der Behandlungseinrichtung (11) und bei Kühlbedarf für die Räume in einen Wärmetauscher (15) des Absorptionskühlsystems (13) geleitet wird.

4. Vorrichtung nach Anspruch 3, zur Durchführens des Verfahrens nach Anspruch 2, dadurch gekennzeichnet, daß in den Räumen (1) ein Lufterwärmer (10) vorgesehen ist, über den das Medium bei Wärmebedarf für die Räume zumindest teilweise geleitet wird.

## Claims

1. Method for treatment of indoor air in rooms for living beings in great numbers, in particular, for livestock, the used air from the rooms being exhausted and fresh air being mixed with the indoor air and condensation heat energy being removed from the indoor air by an evaporator of a heat pump, this heat energy being raised to a higher temperature level and being used for heating characterized in that the fresh air is introduced directly into the rooms and is mixed therein with the indoor air, and
that only indoor air is supplied to the evaporator and the heat energy which has been raised to a higher temperature level is used to heat the fresh air directly when the rooms need to be heated or when cooling is required for the rooms, is used to cool the fresh air via an absorption type cooling system driven by the heat energy.

2. Method according to claim 1 characterized in that the heat energy which has been brought to a higher temperature level is used for downstream heating of the indoor air supplied to the evaporator of the heat pump.

3. Apparatus for carrying out the method according to claim 1 including an exhaust gas pipe (26) for used air, an air inlet pipe (3) for the fresh air, a heat pump (5) via whose evaporator (6) the indoor air is supplied and via whose condenser (8) the heat energy removed from the indoor air and brought to a higher temperature level is transferred to a medium,
characterized in that the air inlet pipe (3) for the fresh air discharges directly into the rooms (1), that the evaporator (6) is arranged as the condenser for the indoor air and is located in the rooms (1), that a treatment means (11) for warming the fresh air as well as an absorption type cooling system driven by this heat energy for cooling the fresh air are provided and that the medium is supplied to a heat exchanger (4) of the treatment means (11), through which the fresh air flows when it is necessary to heat the rooms and is supplied to a heat exchanger (15) of the absorption type cooling system (13) when it is necessary to cool rooms.

4. Apparatus according to claim 3 for carrying out the method according to claim 2 characterized in that an air heater (10) is provided in the rooms (1), to which the medium is at least partially supplied when it is necessary to warm the rooms.

## Revendications

1. Procédé de conditionnement de l'air inérieur de locaux pour êtres vivants en grand nombre, en particulier pour l'élevage de cheptel, dans lequel l'air utilisé est évacué des locaux et de l'air frais est mélangé avec de l'air interieur, et de la chaleur de condensation est extraite par un évaporateur d'une pompe à chaleur, cette chaleur est amenée à un niveau de température plus élevé par la pompe à chaleur et employée pour le chauffage,
caractérise en ce que l'air frais est directement introduit dans les locaux et y est mélangé avec l'air intérieur et qu'exclusivement de l'air intérieur est amené directement sur l'évaporateur de la pompe à chaleur et la chaleur amenée à un niveau de température plus élevé est employée, en cas de besoin de chauffage des locaux directement pour le chauffage de l'air frais ou, en cas de besoin de refroidissement des locaux, pour le refroidissement de l'air frais à l'aide d'un système de refroidissement par absorption fonctionnant au moyen de la chaleur.

2. Procédé selon la revendication 1, caractérisé en ce que la chaleur amenée à un niveau de température plus élevé est utilisée pour le chauffage côté aval de l'air intérieur amené sur l'évaporateur de la pompe à chaleur.

3. Appareil destiné à l'exécution du procédé selon la revendication 1, avec une conduite d'air d'évacuation (26) pour l'air utilisé, une conduite d'air d'entrée (3) pour l'air frais, une pompe à chaleur (5), sur l'évaporateur (6) de laquelle est conduit l'air intérieur et par le condenseur (8) duquel la chaleur extraite de l'air intérieur et amenée à un niveau de température plus élevé est amenée sur un fluide, caractérisé en ce que la conduite d'air d'entrée (3) destinée à l'air frais débouche directement dans les locaux (1), que l'évaporateur (6) constitue un condenseur pour l'air intérieur et est disposé dans les locaux (1), qu'il est prévu un dispositif de conditionnement (11) pour le chauffage de l'air frais ainsi qu'un système (13) de refroidissement par absorption au moyen de cette chaleur peur refroidir l'air frais, et que le fluide est amené en cas de besoin de chauffage des locaux, dans un échangeur de chaleur (4) du dispositif de conditionnement (11) parcouru par l'air frais et, en cas de besoin de refroidissement, dans un échangeur de chaleur (15) du système de refroidissement par absorption.

4. Appareil selon la revendication 3, pour l'exécution du procédé selon la revendication 2, caractérise en ce que, dans les locaux (1) est prévu un réchauffeur d'air (10) par lequel le fluide est au moins partiellement conduit en cas de besoin de chauffage des locaux.